# EUROPÄISCHE PATENTANMELDUNG

(11) **EP 1 379 011 A1**
(43) Veröffentlichungstag der Anmeldung: **07.01.2004**
(21) Anmeldenummer: 03101711.4
(22) Anmeldetag: 12.06.2003
(51) Int. Cl.: H04B 3/23

(54) **Echokompensator**

(30) Priorität: 04.07.2002 DE 10230101
(71) Anmelder: SIEMENS AKTIENGESELLSCHAFT, 80333 München (DE)
(72) Erfinder: Kramer, Richard, 81241 München (DE)

(57) **Zusammenfassung**

Die Erfindung betrifft ein Verfahren zur Leitungsanpassung von analogen Kommunikationsleitungen in Telekommunikationsnetzen, wobei Signalprozessormittel und/oder programmierbare digitale Filter eingesetzt werden. Erfindungsgemäß ist vorgesehen, dass die von einem Echokompensator errechneten Koeffizienten der Leitungsübertragungsfunktion mit den voreingestellten Filterkoeffizienten in einer der Leitung zugeordneten Filtereinrichtung verglichen wird, wobei eine Leitungsfehlanpassung ermittelt wird und daraus ein neuer Filterkoeffizientensatz generiert wird, der in die Filtereinrichtung eingespeist wird. Dabei werden für die vom Echokompensator errechneten und zum Vergleichen vorgesehenen Koeffizienten der Leitungsübertragungsfunktion diejenigen ersten Werte übernommen und verarbeitet, die von dem Echokompensator für einen im Leitungsweg liegenden ersten Leitungsübergang ermittelt werden, welcher mit derjenigen Reflexion mit der kürzesten Laufzeit assoziiert ist. Die Erfindung stellt in Netzen mit hoher Streuung der Leitungsparameter die Aufgabenverteilung zwischen Leitungsanpassung und Echokompensator wieder her.

## Beschreibung

Die Erfindung betrifft ein Verfahren zur Leitungsanpassung von analogen Kommunikationsleitungen in Telekommunikationsnetzen, wobei Signalprozessormittel und/oder programmierbare digitale Filter eingesetzt werden, und ferner eine Vorrichtung zur Durchführung des Verfahrens sowie ein Programmprodukt.

Zur Umsetzung digitaler Vierdraht-Verbindungen auf analoge Zweidraht-Anschlussleitungen werden auf analogen Teilnehmerund Amtsbaugruppen als Signalprozessormittel sog. "Codec"-bzw. Coder/Decoder-Filter mit Analog/Digital- und Digital/Analog-Wandlern zusammen mit Teilnehmer-Anschlussleitungs-Interfaceschaltungen eingesetzt. Die Anpassung an z.B. länderspezifische Leitungsparameter erfolgt durch programmierbare digitale Filter, deren Parametersatz auf die jeweiligen Leitungsparameter abgestimmt wird, wobei der Parametersatz auf Daten beruht, die von einem Provider, einem Netzbetreiber oder einer Telekommunikationsbehörde für einen genormten Standardfall eines Netzes vorgegeben werden, von welchem zumindest einzelne Leitungen je nach Qualität und Beschaffenheit des Netzes mehr oder weniger stark abweichen können, da angeschaltete Leitungen aufgrund qualitativ und quantitativ unterschiedlicher Leitungsübergänge voneinander unterschiedliche Impedanzen aufweisen können, was zu einer Leitungsfehlanpassung führt. Insbesondere bei Übergängen zwischen Internetprotokoll-basierten Netzen, sog. "Voice over IP" - Netzen, und sog. PTSN-Netzen ("Public Switched Telephone Network"), d.h. herkömmlichen Telefonnetzen mit analogen Amtsleitungen, führen die Fehlanpassungen zu Reflexionen an der Vierdraht-Zweidraht-Umsetzung, die aufgrund der im Vergleich zu PSTN-Netzen hohen Verzögerung der IP-Netze erst bei PSTN-IP-Netz-Kopplungen als akustisches Echo hörbar werden. Die durch die Fehlanpassungen definierte zusätzliche Stör stelle verursacht bei den zwischen PSTN- und IP-Netz eingesetzten Echokompensatoren einen höheren Rechenaufwand und längere Konvergenzzeiten, um für die eingangsseitige Leitung das Echo zu reduzieren. Insbesondere zu Beginn einer Kommunikationsverbindung führt der aufgrund der zusätzlichen Störstelle verursachte Effekt zu einem hörbaren Echo. Aufgrund der verlängerten Rechenzeiten und dem damit korrespondierenden störend langsamen Konvergenzverhalten bei den eingesetzten Echokompensatoren bleibt jedoch bei diesem Stand der Technik der Ablauf einer derartigen Kommunikationsverbindung beeinträchtigt.

Der Erfindung liegt demgegenüber die Aufgabe zugrunde, ein Verfahren der eingangs genannten Art bereitzustellen, mit dem Leitungsfehlanpassungen und daraus resultierende Reflexionen insbesondere bei Übertragungsübergängen von Internetprotokoll-basierten Netzen oder Mobilfunknetzen auf analoge Telefonnetze auf wirtschaftliche Weise weitgehend minimiert werden und die leitungsspezifischen (pro Anschlussleitung konstanten) (Rest-) Anpassungen wieder vom Echokompensator, der nur verbindungsspezifische Echos möglichst schnell kompensieren sollte, auf die Leitungsanschaltung zurückgeführt werden.

Die Aufgabe wird dadurch gelöst, dass die von einem Echokompensator errechneten Koeffizienten der Leitungsübertragungsfunktion mit den voreingestellten Filterkoeffizienten in einer der Leitung zugeordneten digitalen Filtereinrichtung verglichen wird, wobei eine Leitungsfehlanpassung ermittelt wird und daraus ein neuer Filterkoeffizientensatz generiert wird, der in die digitale Filtereinrichtung eingespeist wird.

Charakteristisch für die Erfindung ist mithin, dass die Daten, die für die jeweilige Leitung von einem Echokompensator ermittelt werden, der vorzugsweise in einem der jeweiligen Leitung zugeordneten Gateway angeordnet sein kann, ein Maß für die Reflexion in der Leitung darstellen und somit auch ein Maß für die Leitungsfehlanpassung wiederspiegeln, so dass durch Vergleichsoperationen mit den in der digitalen Filtereinrichtung eingespeicherten fest vorgegebenen Koeffzienten ein sich der tatsächlich vorliegenden Leitungscharakteristik der angeschalteten Leitung annähernder Parametersatz generiert wird. Dieser neu aus den Vergleichsoperationen generierte Parametersatz wird instantan in der der Leitung zugehörigen digitalen Filtereinrichtung eingespeichert. Dadurch verbessert sich das individuelle Reflexionsverhalten in der jeweils geschalteten Leitung für alle Gesprächsverbindungen, wobei z.B. In-situ bzw. Vorort-Messungen und Einstellungen an den einzelnen Leitungen mit entsprechendem personellen Aufwand eingespart werden können.

Eine bevorzugte Ausgestaltung des erfindungsgemäßen Verfahrens kann darin bestehen, dass für die vom Echokompensator errechneten und zum Vergleichen vorgesehenen Koeffizienten der Leitungsübertragungsfunktion diejenigen ersten Werte übernommen und verarbeitet werden, die von dem Echokompensator für einen im Leitungsweg liegenden ersten Leitungsübergang ermittelt werden. Nach dem Konvergieren weist das Filterkoeffizientenregister eines Echokompensators die Filterkoeffizienten für die Impulsantwort der Leitungsstrecke auf, wobei sich die Impulsantwort von einer ersten Übergangsstelle über weitere nachgeordnete -analoge- Übergänge mit den entsprechenden Laufzeitunterschieden für die an den Übergängen erzeugten Reflexionen bzw. Echos erstreckt; indem lediglich die ersten mit der ersten Übergangsstelle assoziierten Werte erfasst und übernommen werden, die bereits ein Maß für die Reflexion an dem analogen Übergang und somit für die Fehlanpassung sind, ergibt sich bereits eine individuelle Leitungsanpassung, die in der Größenordnung von einer Millisekunde liegt. Der eigentliche für den Vergleich und zum Generieren neuer Filterkoeffizienten vorgesehene Rechenvorgang wird dabei mittels Faltungs- und/oder Fouriertransformationsoperationen durchgeführt. Alternativ kann der für den Vergleich vorgesehene Rechenvorgang mittels rechenzeitoptimierter Näherungsverfahren durchgeführt werden.

In vorrichtungstechnischer Hinsicht wird die oben angegebene Aufgabe bei einer zur Durchführung des erfindungsgemäßen Verfahrens vorgesehenen Vorrichtung mit digitalen Signalprozessormitteln dadurch gelöst, dass wenigstens eine Prozessoreinrichtung vorgesehen ist, welche die vom Echokompensator errechneten Koeffizienten erfasst, den Vergleich durchführt, daraus neue Parameter generiert und in die digitale Filtereinrichtung einspeist.

Die erfindungsgemäßen Verfahrensschritte können vorzugsweise durch eine in einem Gateway oder in einer zugehörigen Kommunikationseinrichtung, z.B. einem "PBX" ("Private Branch Exchange" bzw. Nebenstellenanlage), für herkömmliche Steuerungszwecke ohnehin bereits vorgesehene und installierte Prozessoreinrichtung ausgeführt werden. In diesem Fall ist keine zusätzlich zu installierende Hardware erforderlich.

Die Aufgabe wird ferner durch ein Programmprodukt gelöst, auf welchem das Verfahren nach einem der Ansprüche 1 bis 4 implementiert ist. Das Programmprodukt kann beispielsweise als schneller Maschinencode ausgebildet sein und ist im Speicher der Vorrichtung zur Durchführung des erfindungsgemäßen Verfahrens aufgenommen, so dass ein automatisierter Verfahrensablauf durchführbar ist.

Nachstehend soll eine Ausführungsform der Erfindung anhand eines Ausführungsbeispiels näher erläutert werden.

Insbesondere in Ländern, in denen das öffentliche Telefonnetz dereguliert ist und verschiedenen Netzbetreibern Zugang bietet, weisen die Impedanzen der analogen Anschlussleitungen starke Streuungen auf. Die Leitungsfehlanpassung ist jedoch bei analogen oder gemischt analogen/digitalen Telefonnetzen wegen der relativ kurzen Verzögerungszeiten kaum wahrnehmbar. Erst bei hohen Verzögerungszeiten, die insbesondere durch Ankopplung von Internetprotokoll-basierten Netzen oder Mobilfunknetzen an herkömmliche Telefonnetze mit analogen An schlussleitungen auftreten und in der Größenordnung von 100 bis 300 Millisekunden liegen, ergeben sich bei analogen Leitungen (z.B. Amtsanschlüssen) mit Vierdraht/Zweidraht-Umsetzung Leitungsfehlanpassungen mit hörbaren Echos, die den Ablauf von Telefongesprächsverbindungen stören. Demgemäß sind in den Gateways Echokompensatoren zum Entfernen der in diesen Netzen erzeugten Echos vorgesehen. Zudem werden die zur Leitungsanpassung eingesetzten digitalen Signalprozessoren bzw. Filtereinrichtungen mit fest vorgegebenen Filterkoeffizienten für die Übertragungsfunktion programmiert, welche standardmäßig der Vorgabe des jeweiligen Providers, Netzbetreibers oder Aufsichtsbehörde entstammen und als standardisierte Norm-Nachbildung mit einer bestimmten Impedanz von z.B. 600 Ohm lediglich ein Mittel aller Anschlussleitungen im jeweiligen Netz darstellen. Da die einzelnen Leitungen mit ihren Leitungsimpedanzwerten gegenüber diesem Mittel eine große Streuung aufweisen können, führen die daraus resultierenden Fehlanpassungen zu erheblichen Reflexionen mit Echos bereits an dem Vierdraht/Zweidraht-Hybridübergang der analogen Anschlussbaugruppe in der Leitung. Für eine individuelle Leitungsanpassung wäre somit erforderlich, alle Anschlussleitungen im entsprechenden Netz einzeln nach der jeweils zugeordneten Impedanz auszumessen und daraus für jede Anschlussleitung die entsprechenden Filterkoeffizienten zu bestimmen und in den jeweiligen Signalprozessor bzw. die jeweilige digitale Filtereinrichtung einzuspeisen, was einen enormen personellen Aufwand voraussetzen würde.

Hier nun setzt das erfindungsgemäße Verfahren an, indem die von einem Echokompensator errechneten Koeffizienten der Leitungsübertragungsfunktion mit den voreingestellten Koeffizienten in einer der jeweiligen Anschlussleitung zugeordneten Filtereinrichtung verglichen wird, wobei eine Leitungsfehlanpassung ermittelt wird und daraus ein neuer Filterkoeffizientensatz generiert wird, der in die Filtereinrichtung instantan eingespeist wird. Die vom Echokompensator errechneten Koeffizienten beschränken sich dabei auf eine erste Übergangs stelle in der Anschlussleitung, d.h. auf diejenige Reflexion mit der kürzesten Laufzeit. Indem auf der Basis dieser Koeffizienten als Maß für die Leitungsfehlanpassung eine Vergleichsprozedur durchgeführt wird, bei der neue Filter-Parameter für die digitale Filtereinrichtung generiert und instantan in diesen eingespeist werden, ergibt sich dadurch bereits zu Anfang einer Gesprächsverbindung über die Anschlussleitung eine verbesserte und an die tatsächliche Impedanz angenäherte Leitungsanpassung. Es erfolgt dadurch eine individuelle Leitungsanpassung ohne umständliche und personalaufwendige Vor-Ort-Messungen und Einstellungen an der entsprechenden Anschlussleitung bzw. digitalen Filtereinrichtung. Falls die Leitungsanschaltung bzw. Telefonvermittlungsanlage und ein IP-Gateway eine Kommunikationseinheit bilden, wird der Datenaustausch zwischen den Komponenten erleichtert. Im Ausführungsbeispiel wird das Zusammenwirken des Echokompensators und der digitalen Filtereinrichtung in dem Gateway von einem dort ohnehin schon für herkömmliche Steuerungsaufgaben vorgesehenen und installierten Mikroprozessor durchgeführt, indem der Mikroprozessor zusätzlich noch einen Programmcode mit den darin implementierten erfindungsgemäßen Verfahrensschritten ausführt, so dass das erfindungsgemäße Verfahren ohne zusätzliche Hardware durchführbar ist. Die Erfindung stellt in Netzen mit hoher Streuung der Leitungsparameter die Aufgabenverteilung zwischen Leitungsanpassung und Echokompensator wieder her.

## Patentansprüche

1. Verfahren zur Leitungsanpassung von analogen Kommunikationsleitungen in Telekommunikationsnetzen, wobei Signalprozessormittel und/oder programmierbare digitale Filter eingesetzt werden,
**dadurch gekennzeichnet,**
**dass** die von einem Echokompensator errechneten Koeffizienten der Leitungsübertragungsfunktion mit voreingestellten Filterkoeffizienten in einer der Leitung zugeordneten digitalen Filtereinrichtung verglichen werden, wobei eine Leitungsfehlanpassung ermittelt wird und daraus ein neuer Filterkoeffizientensatz generiert wird, der in die digitale Filtereinrichtung eingespeist wird.

2. Verfahren nach Anspruch 1,
**dadurch gekennzeichnet,**
**dass** für die vom Echokompensator errechneten und zum Vergleichen vorgesehenen Koeffizienten der Leitungsübertragungsfunktion diejenigen ersten Werte übernommen und verarbeitet werden, die von dem Echokompensator für einen im Leitungsweg liegenden ersten Leitungsübergang ermittelt werden.

3. Verfahren nach Anspruch 1 oder 2,
**dadurch gekennzeichnet,**
**dass** der Vergleich mittels Faltungs- und/oder Fouriertransformationsoperationen durchgeführt wird.

4. Verfahren nach einem der vorhergehenden Ansprüche,
**dadurch gekennzeichnet,**
**dass** der Vergleich mittels rechenzeitoptimierter Näherungsverfahren durchgeführt wird.

5. Vorrichtung zur Durchführung des Verfahrens nach einem der Ansprüche 1 bis 4 mit Signalprozessormitteln,
**dadurch gekennzeichnet,**
**dass** wenigstens eine Prozessoreinrichtung vorgesehen ist, welche die vom Echokompensator errechneten Koeffizienten erfasst, den Vergleich durchführt, daraus neue Parameter generiert und in die digitale Filtereinrichtung einspeist.

6. Programmprodukt, auf welchem das Verfahren nach einem der Ansprüche 1 bis 4 implementiert ist.
